# EUROPEAN PATENT APPLICATION

(11) **EP 1 533 710 A1**
(43) Date of publication of application: **25.05.2005**
(21) Application number: 03766740.9
(22) Date of filing: 05.08.2003
(51) Int. Cl.: G06F 15/00, G06F 13/00, G06F 17/30, G06F 17/28

(54) **MULTILINGUAL ADAPTIVE SYSTEM**

(30) Priority: 05.08.2002 JP 2002227870
(71) Applicant: Olympus Corporation, Tokyo 151-0072 (JP)
(72) Inventor: FUKUSHIMA, Yuji, Aizuwakamatsu-shi, Fukushima 965-0854 (JP); HASEGAWA, Tomoyoshi 387-5, Aza Murahigashi, Aizuwakamatsu-shi, Fukushima 965-0846 (JP); NIHEI, Kunihiro 191, Azaasano, Oazaasayama, Kawanumagun, Fukushima 969-3461 (JP)
(74) Representative: von Hellfeld, Axel, Dr. Dipl.-Phys.,
(86) International application number: PCT/JP2003/009917
(87) International publication number: WO 2004/013761

(57) **Abstract**

A Web service server 11 is connected to a data storage device 14 including a large-capacity HDD to store various data items in order to create and develop web pages for various linguistic areas. A Web database server 12 is connected to a data storage device 15 including a large-capacity HDD to store data items necessary to maintain a system, the data items corresponding to the various linguistic areas. Real-time and on-demand data can be provided on the web pages for various language types.

## Description

### Technical Field

The present invention relates to a multilingual support system for opening information to public over the Internet in a requested language.

### Background Art

In recent years, an active information interchange among individuals over the Internet is being expanded on a global scale. As a global information interchange via the Internet, for example, a World Wide Web (WWW) service is developed, web pages are created in a server, and a client accesses the created web pages. Thus, various on-demand data items are transmitted and received in real time.

In the global information interchange, information can be interchanged without regional and time constraints. Consequently, not only information interchanges among individuals but also business information interchanges such as merchandising and product ordering are being performed over the above-mentioned web pages.

In the information interchange using the World Wide Web, supporting various languages is one of basic functions which should be provided for a system. At the side of system development, processing screens and programs are generally needed as much as the kinds of languages used. Accordingly, enormous man-hours are needed for the duration of development of a system construction, the system supporting various languages. In addition, it takes much time to support the users using different languages.

The present invention is made in consideration of the above circumstances. It is an object of the present invention to provide a multilingual support system capable of providing real-time and on-demand data in web pages supporting various language types.

### Disclosure of Invention

According to the present invention, a multilingual support system includes: a display information storage means for storing display information having a text display area to display a text; an attribute information storage means for storing attribute information of the text displayed in the text display area; a first linguistic information storage means for storing text information in a first language type corresponding to the attribute information of the text displayed in the text display area; a second linguistic information storage means for storing text information in a second language type corresponding to the attribute information of the text displayed in the text display area; a linguistic-information request receiving unit for receiving a signal to request a display in a predetermined language type; a text information output means for outputting text information to be displayed in the text display area from the text information stored in the first and second linguistic information storage units in response to the request signal received by the linguistic-information request receiving unit; and a combination means for combining the text information, which is outputted through the text information output unit, into the text display area corresponding to the attribute information.

According to the present invention, a multilingual support system includes: a display means for displaying predetermined linguistic information; a selection means for selecting a language type; an output means for outputting a request signal to request a display in a predetermined language type selected by the selection means; a display information storage means for storing display information having a text display area to display a text; an attribute information storage means for storing attribute information of the text displayed in the text display area; a first linguistic information storage means for storing text information in a first language type corresponding to the attribute information of the text displayed in the text display area; a second linguistic information storage means for storing text information in a second language type corresponding to the attribute information of the text displayed in the text display area; a linguistic-information request receiving means for receiving the signal to request a display in the predetermined language type; a text information output means for outputting text information to be displayed in the text display area from the text information stored in the first and second linguistic information storage units in response to the request signal received by the linguistic-information request receiving means; a combination means for combining the text information, which is outputted through the text information output unit, in the text display area corresponding to the attribute information; and a transmission means for transmitting display information supplied from the combination means to the display unit.

### Brief Description of the Drawings

Fig. 1 is a block diagram showing the configuration of a global system according to an embodiment of the present invention.
Fig. 2 is a first flowchart of an information service processing of the global system in Fig. 1.
Fig. 3 is a second flowchart of the information service processing of the global system in Fig. 1.
Fig. 4 is a first diagram explaining the processings shown in Figs. 2 and 3.
Fig. 5 is a second diagram explaining the processings shown in Figs. 2 and 3.
Fig. 6 is a third diagram explaining the processings shown in Figs. 2 and 3.
Fig. 7 is a fourth diagram explaining the processings shown in Figs. 2 and 3.
Fig. 8 is a fifth diagram explaining the processings shown in Figs. 2 and 3.
Fig. 9 is a sixth diagram explaining the processings shown in Figs. 2 and 3.
Fig. 10 is a seventh diagram explaining the processings shown in Figs. 2 and 3.
Fig. 11 is a flowchart of a processing of adding a language type in a language-type label-name definition table used in the processings in Figs. 2 and 3.
Fig. 12 is a first diagram explaining the processing in Fig. 11.
Fig. 13 is a first diagram explaining the processing in Fig. 11.

### Best Mode for Carrying Out the Invention

An embodiment of the present invention will now be described hereinbelow with reference to the drawings.

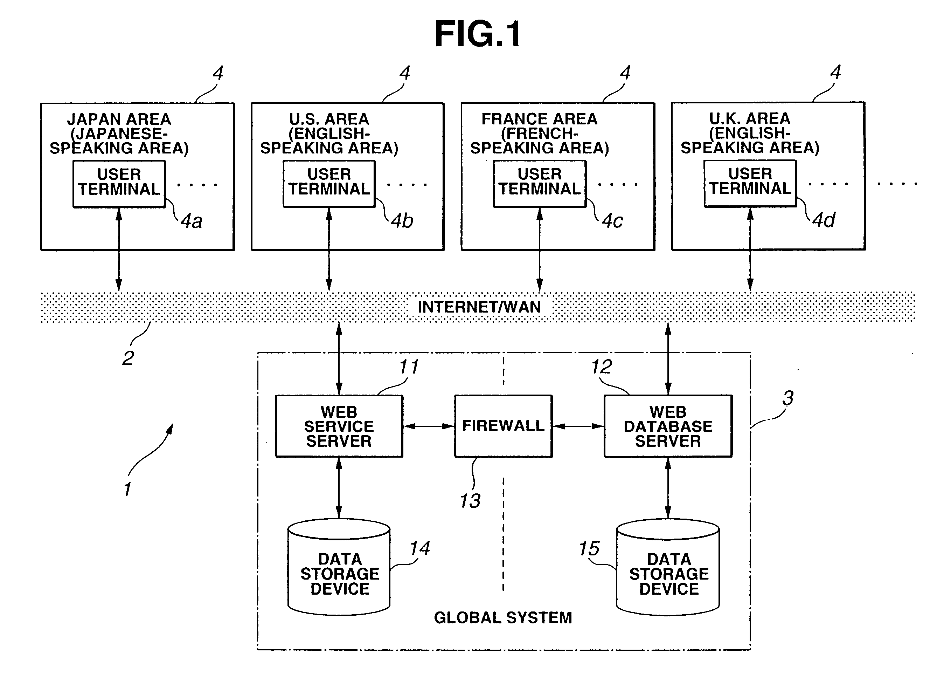

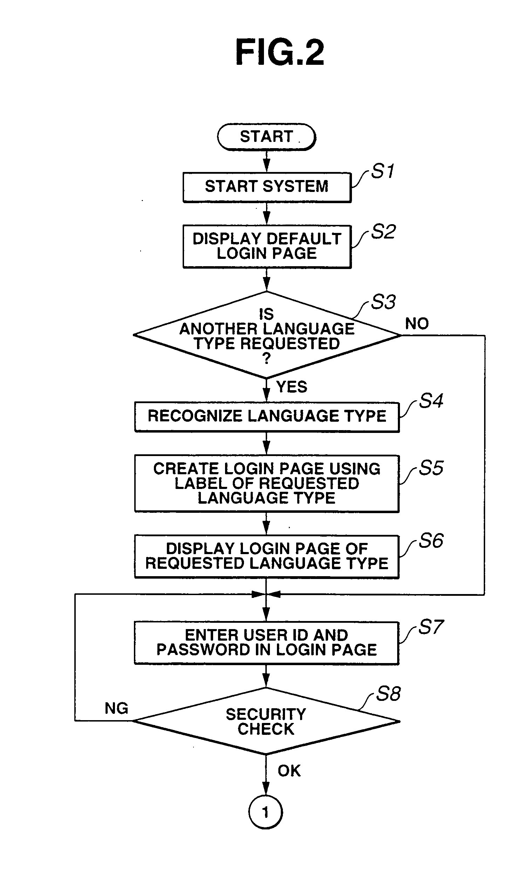

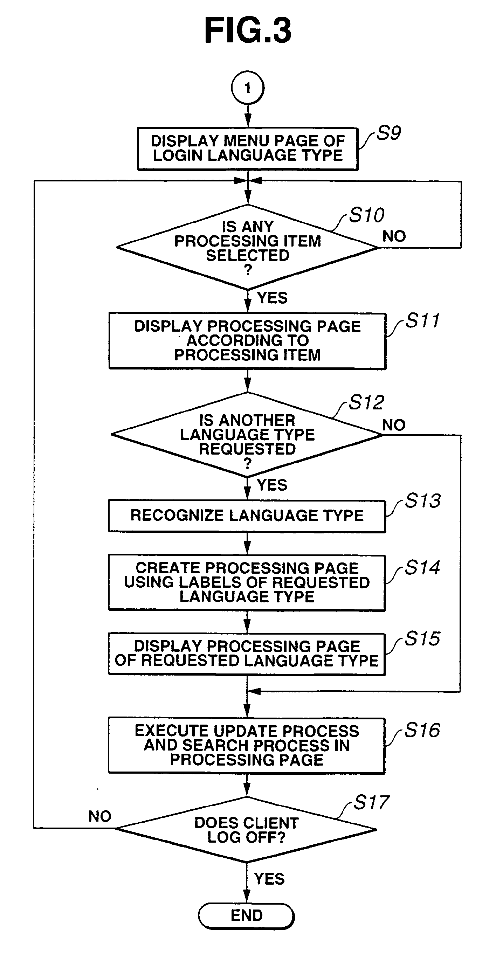

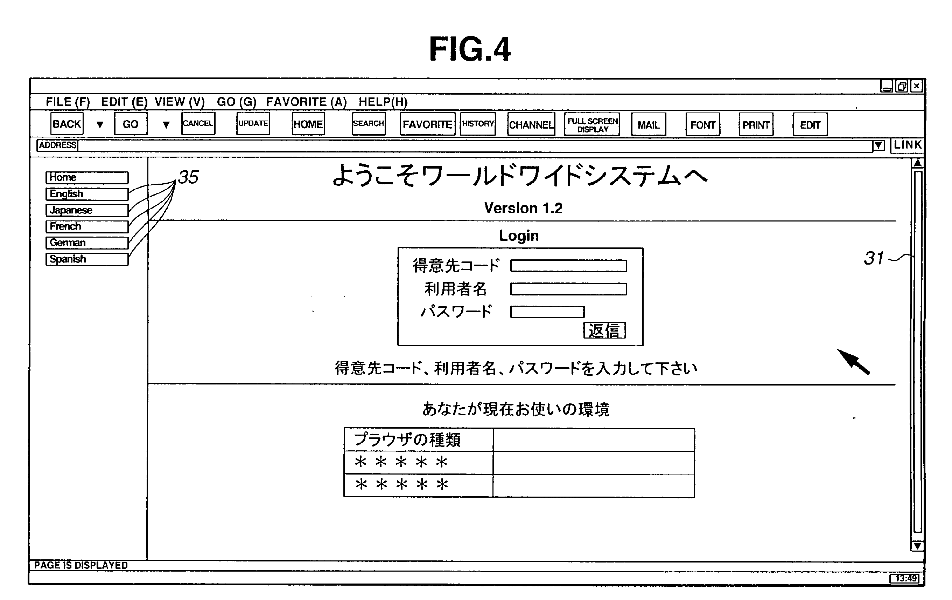

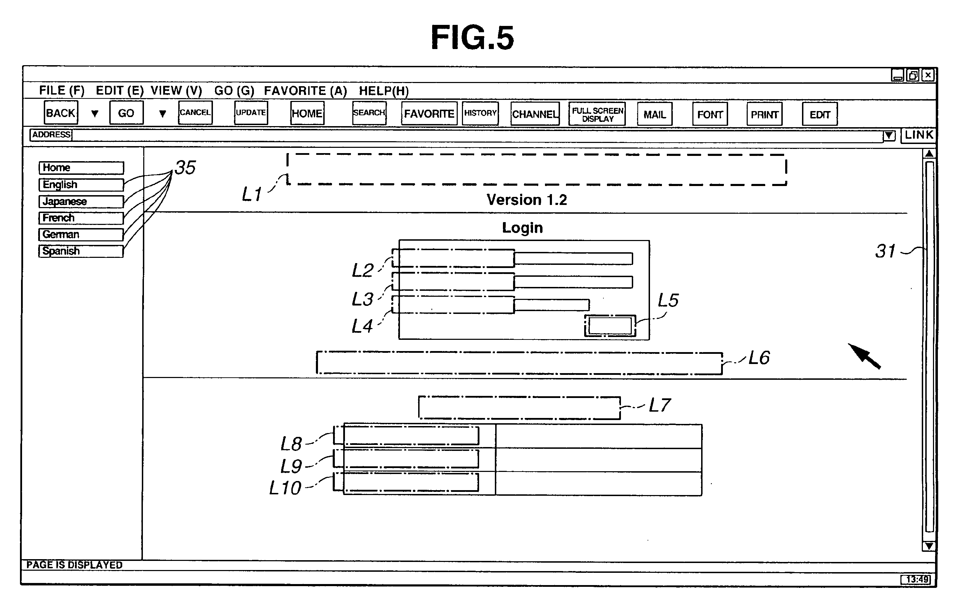

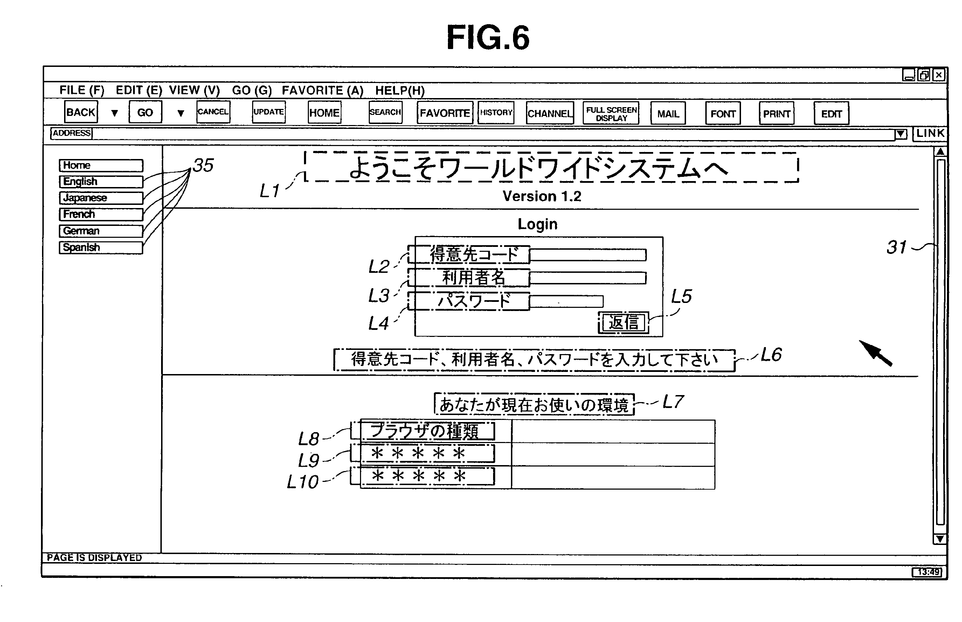

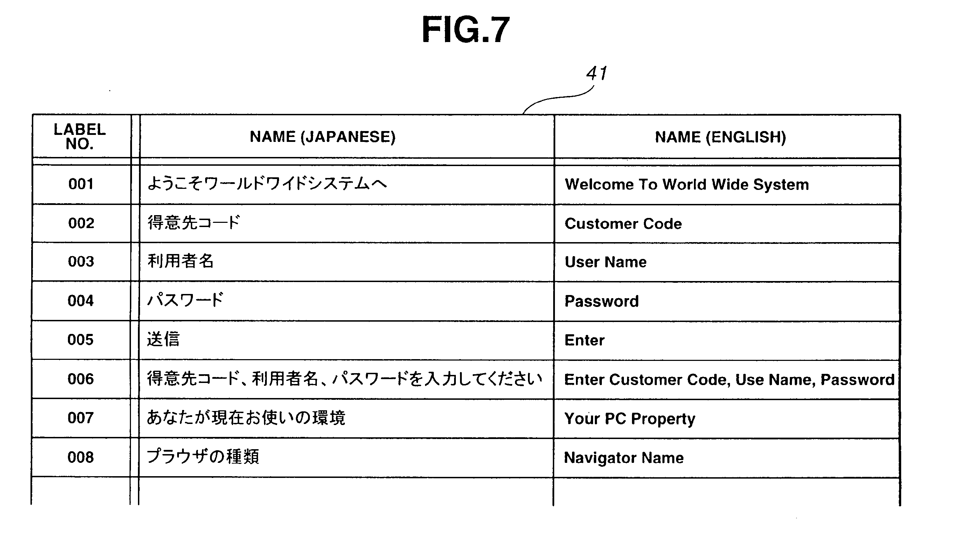

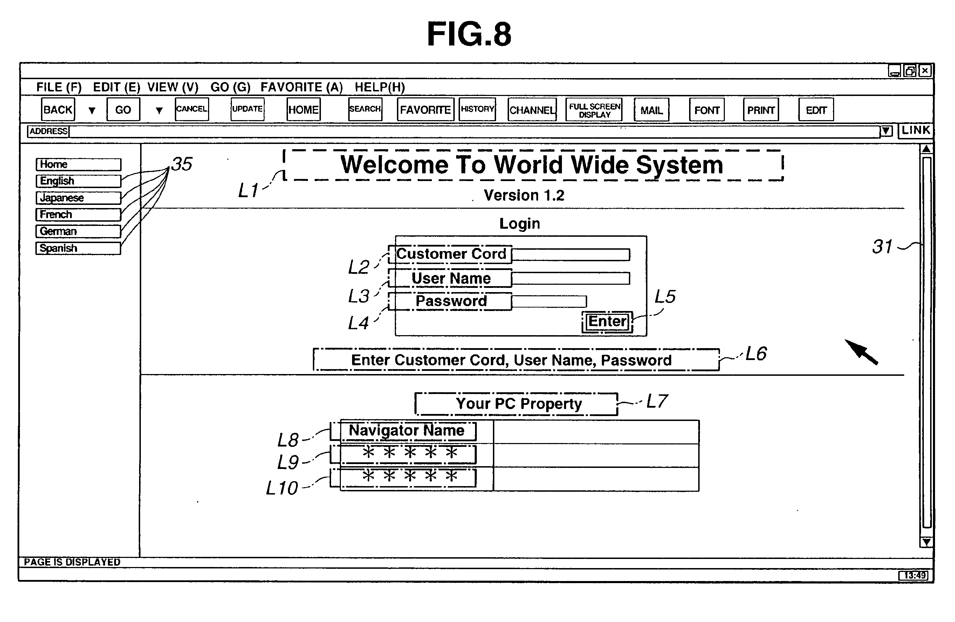

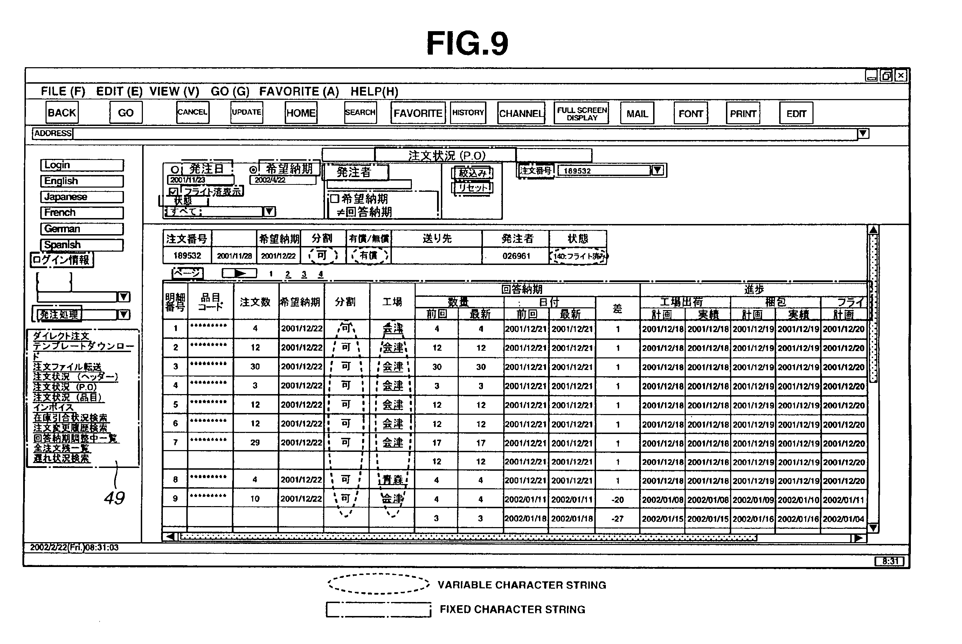

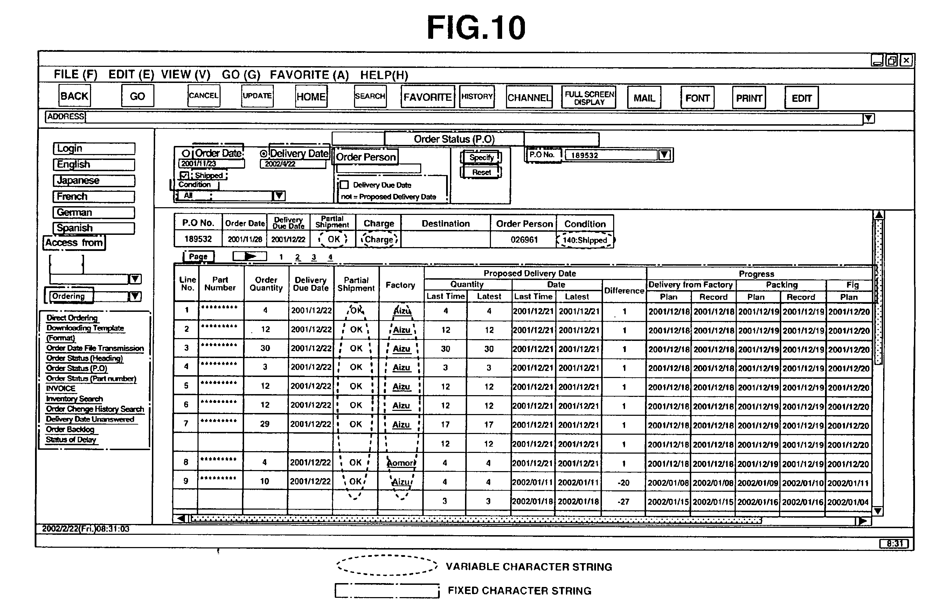

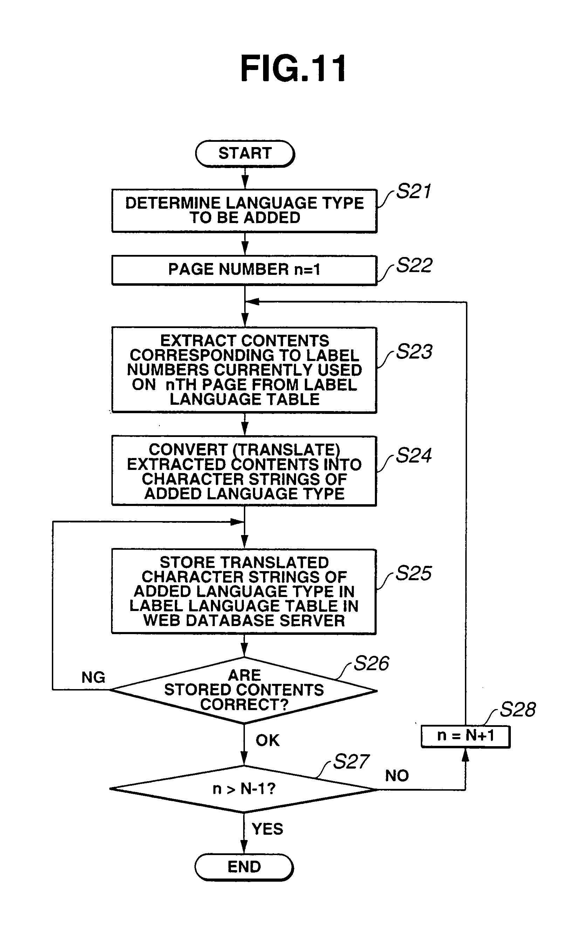

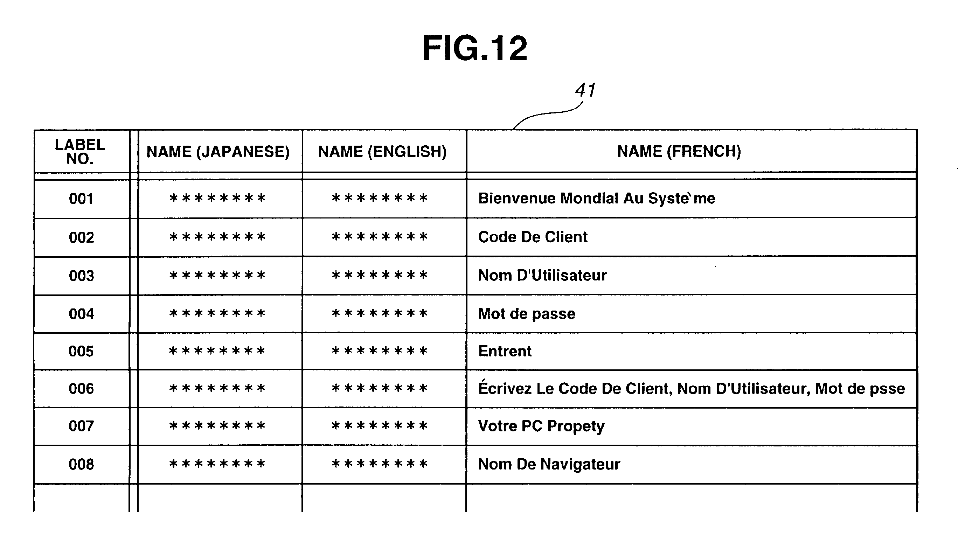

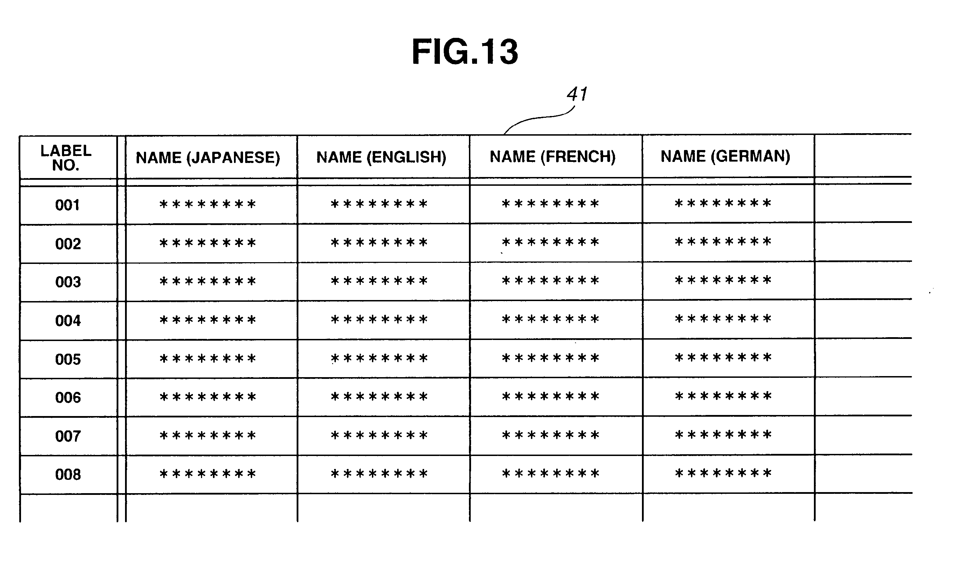

Figs. 1 to 13 relate to the embodiment of the present invention. Fig. 1 a block diagram showing the configuration of a global system. Fig. 2 is a first flowchart of an information service processing of the global system in Fig. 1. Fig. 3 is a second flowchart of the information service processing of the global system in Fig. 1. Fig. 4 is a first diagram explaining the processings shown in Figs. 2 and 3. Fig. 5 is a second diagram explaining the processings in Figs. 2 and 3. Fig. 6 is a third diagram explaining the processings in Figs. 2 and 3. Fig. 7 is a fourth diagram explaining the processings in Figs. 2 and 3. Fig. 8 is a fifth diagram explaining the processings in Figs. 2 and 3. Fig. 9 is a sixth diagram explaining the processings in Figs. 2 and 3. Fig. 10 is a seventh diagram explaining the processings in Figs. 2 and 3. Fig. 11 is a flowchart of a processing of adding a language type in a language-type label-name definition table used in the processings in Figs. 2 and 3. Fig. 12 is a first diagram explaining the processing in Fig. 11. Fig. 13 is a first diagram explaining the processing in Fig. 11.

Referring to Fig. 1, a global system 1 realizing a multilingual support system according to the present embodiment is connected to the Internet (or WAN) 2. The global system 1 opens web pages to a plurality of clients 4 connected to the Internet 2.

The clients 4 include, for example, a user terminal 4a in the Japan area as a Japanese-speaking area, a user terminal 4b in the U.S. area as an English-speaking area, a user terminal 4c in the France area as a French-speaking area, a user terminal 4d in the U.K. area as an English-speaking area, and the like. The clients 4 are spread in various linguistic areas and countries on a worldwide scale.

The global system 1 comprises a Web service server 11 which connects with the Internet 2 and opens the web pages to public and a Web database server 12 which manages data in the present system. The Web service server 11 connects with the Web database server 12 through a firewall 13 in order to retain security.

The Web service server 11 connects with a data storage device 14 comprising a large-capacity HDD and the like to store various data items used to create and develop the web pages for various linguistic areas. The Web database server 12 connects with a data storage device 15 comprising a large-capacity HDD and the like to store data items necessary to maintain the system, the data items corresponding to the various linguistic areas.

The information service process of the global system 1 with the above-mentioned configuration according to the present embodiment will now be described with reference to the flowcharts of Figs. 2 and 3 and Figs. 4 to 10.

Referring to Fig. 2, when the client 4 accesses the Web service server 11 via the Internet 2, the system is started in the Web service server 11 in step S1. In step S2, a default login page 31 serving as a homepage of the web pages is displayed in a monitor of the client 4. The web pages, opened to public through the Web service server 11, includes the default login page 31 as the homepage and other pages. Each page is linked to predetermined pages, thus realizing a jump to another page.

Referring to Fig. 4, in the default login page 31, a service language is, for example, Japanese. In the login page 31, a plurality of labels L1, L2, ... are pasted as shown in Fig. 5. A Japanese character string indicating a desired content is defined as a label name. The respective label names are arranged and displayed as the labels L1, L2, ... as shown in Fig. 6.

In step S3, whether any language type other than Japanese is requested by the client 4 is determined in the default login page 31. In this instance, the client 4 clicks on an arbitrary language-type selection button 35 in the default login page 31 of Fig. 4 to request a language type.

If another language type is requested by the client 4, in step S4, the Web service server 11 recognizes which language type has been selected from among the language-type selection buttons 35. In step S5, label names each comprising a character string according to the recognized language type are assigned to the labels L1, L2, ... to create the login page 31.

In this instance, a method for assigning label names to the respective labels L1, L2, ... will now be described. In the data storage device 15 of the Web database server 12, a language-type label-name definition table 41 as shown in Fig. 7 is stored. In the language-type label-name definition table 41, character strings according to registered languages are defined as label names every label number (label No.) given to each of the labels constituting each page. The language-type label-name definition table 41 is formed by the Web service server 11 and is transmitted to the Web database server 12 through the firewall 13 and is then stored in the data storage device 15.

On the other hand, in the data storage device 14 of the Web service server 11, module software called a label name conversion module is stored. The label name conversion module converts labels in accordance with a language type to be pasted as the labels L1, L2, ... in creating each page constituting the web pages.

The label name conversion module uses a page number of each page constituting the web pages, a language type, and a label number (label No.) as parameters. The Web service server 11 transmits the page number of a page which the client 4 is viewing, a language type requested by the client 4, and label numbers (label Nos.) arranged in this page to the Web database server 12, thus obtaining label names (character strings according to a desired language type) corresponding to the label numbers (label Nos.) from the Web database server 12. The obtained label names are then assigned to the respective labels L1, L2, ...

In step S6, the login page 31, in which the label names have been assigned to the respective labels in accordance with the requested language type, is displayed on the monitor of the client 4. Fig. 8 shows the login page 31 in English requested as the language type.

In step S7, it is in standby mode until the client 4 enters a user ID and a password in the login page. If there is no language type request in step S3, the login page is in Japanese (refer to Fig. 4). If there is a language type request in step S3, the login page is in a requested language (for example, if English is requested, refer to Fig. 8). In step S8, a security check regarding access is performed on the basis of the user ID and the password. If the user ID and the password are verified by the security check, the process proceeds to step S9 in Fig. 3.

In step S9, a menu page (not shown) is displayed in the login language type on the monitor of the client 4. In step S10, it is in standby mode until the client 4 selects a processing item on the menu page. The language type in step S10 will be referred to as a set language type hereinbelow.

If the client 4 selects any processing item on the menu page, in step S11, a processing page linked with the selected processing item is created in the set language type and the resultant page is displayed on the monitor of the client 4.

On the resultant processing page, whether the client 4 requests any language type other than the set language type is determined in step S12 in the same way as the login page 31.

If the client 4 requests any language type other than the set language type, in step S13, the Web service server 11 recognizes which language type is selected. In step S14, the recognized language type is set to a new set language type, label names each comprising a character string in that language type are assigned to the labels L1, L2, ... to create a processing page. In step S15, the processing page, in which the label names in the requested language type have been assigned to the labels, is displayed on the monitor of the client 4. The process proceeds to step S16.

If the client 4 does not request any language type other than the set language type in step S11, the process proceeds to step S16.

In step S16, in response to a request from the client, for example, an update processing and a search processing are executed on the processing page displayed. After that, whether the client logs off is determined in step S17. If he or she logs off, the process is terminated. If the client does not log off, the process is returned to step S10.

Fig. 9 illustrates an example of a processing page in which the language type is Japanese. Fig. 10 illustrates an example of a processing page in which the language type is English. Referring to Figs. 9 and 10, each dashed line indicates a label to which a fixed character string is assigned and each one-dotted chain line indicates a label to which a variable character string is assigned. As mentioned above, a fixed character string is defined in the language-type label-name definition table 41. A variable character string is defined in a variable-label-name definition table (not shown) stored in the data storage device 15 of the Web database server 12.

In the variable-label-name definition table, for example, "Aizu" and "Aomori" in English in Fig. 10 are defined so as to be related to "Aizu" and "Aomori" in Japanese in Fig. 9, "Aizu" and "Aomori" meaning factory names.

In addition to the parameters such as a page number, a language type, and a label number (label No.), the label name conversion module transmits to the Web database server 12 attribute information indicating whether a label name corresponding to the label number (label No.) is variable or fixed, and a code (for example, a Japanese character string in default mode) indicating a content, which is assigned to the label when the label name is variable, thus obtaining a character string from the variable-label-name definition table.

Consequently, a variable label name can be displayed as a label, to which a variable character string is assigned, in accordance with the language type. In other words, in a page corresponding to a page number N, according to X language type, a fixed character string based on the language-type label-name definition table 41 is assigned to each fixed label and a variable character string based on the variable-label-name definition table is assigned to each variable label. The resultant labels are displayed.

A language type adding processing in the language-type label-name definition table 41 will now be described.

According to the present embodiment, for example, Japanese and English label names are defined in the language-type label-name definition table 41 in default mode as shown in Fig. 7. Label names of a desired language type can be added and stored. A case where a language type to be added is French will now be described hereinbelow as an example.

Referring to Fig. 11, in the Web service server 11, a language type to be added is determined in step S21. In step S22, a page number is set to 1. In step S23, the contents of label names corresponding to the label Nos. on the nth page in the language-type label-name definition table 41 are extracted from the Web database server 12. In step S24, the extracted contents of the label names corresponding to the label Nos. are converted into character strings of the determined and added language type (if the contents of the label names are expressed using, for example, Japanese character strings, the Japanese character strings are automatically translated into character strings of the added language type).

Then, the character strings of the added language type converted (translated) in step S25 are stored in the language-type label-name definition table 41 of the Web database server 12. In this instance, the converted character strings can be felicitously changed using a keyboard or the like.

Subsequently, in step S26, a page is created and displayed using the label names of the added language type stored in the language-type label-name definition table 41 of the Web database server 12 to check the stored contents. If NG, the process is returned to step S25. If OK, whether n exceeds (N - 1) (N: the number of pages constituting the web pages) is determined in step S27. If n is lower than (N - 1), n is incremented in step S28 and the process is then returned to step S23. If n exceeds (N - 1), the process is terminated.

Thus, the label names of the added language type are defined and stored in the language-type label-name definition table 41 corresponding to all pages constituting the web pages.

Fig. 12 illustrates the language-type label-name definition table 41 in which label names are defined and stored using French as the added language type. If another language such as German is added in the same way, the language-type label-name definition table 41 capable of supporting many more language types can be obtained as shown in Fig. 13 (in Figs. 12 and 13, "*****" denotes an abbreviation of each character string of the corresponding language).

As mentioned above, according to the present embodiment, the language-type label-name definition table 41 is formed in the Web database server 12 and the Web service server 11 allocates each label name as a kind of variable in the web pages according to a language type requested by the client 4. Thus, if the Web service server 11 only requests the label names to the Web database server 12, the web pages according to the language requested by the client 4 can be created and opened to public on demand in real time.

If the language-type label-name definition table 41 is only added or changed, the label names of the pages constituting the web pages can be easily altered into label names in a desired language.

The embodiment of the present invention has been described as mentioned above. The present invention is not limited to the foregoing embodiment but many modifications and variations are possible without departing from the spirit and scope of the present invention.

### Industrial Applicability

As mentioned above, according to the present invention, real-time and on-demand data can be provided in web pages supporting a plurality of language types.

### CROSS-REFERENCE TO RELATED APPLICATION

This application claims benefits of Japanese Application No. 2002-227870 filed in Japan on Aug. 5, 2002, the contents of which are incorporated by reference in the description of this application, the claims, and the drawings.

## Claims

1. A multilingual support system comprising:
display information storage means for storing display information having a text display area to display a text;
attribute information storage means for storing attribute information of the text displayed in the text display area;
first linguistic information storage means for storing text information in a first language type corresponding to the attribute information of the text displayed in the text display area;
second linguistic information storage means for storing text information in a second language type corresponding to the attribute information of the text displayed in the text display area;
a linguistic-information request receiving unit for receiving a signal to request a display in a predetermined language type;
text information output means for outputting text information to be displayed in the text display area from the text information stored in the first and second linguistic information storage means in response to the request signal received by the linguistic-information request receiving unit; and
combination means for combining the text information, which is output through the text information output means, with the text display area corresponding to the attribute information.

2. The multilingual support system according to Claim 1, further comprising:
stored-text-information changing and adding means for changing the text information in either of the language types stored in the first and second linguistic information storage means and adding text information in another language type.

3. The multilingual support system according to Claim 1 or 2, wherein
the text display area includes a fixed text display area, where fixed text information is displayed, and a variable text display area, where input text information is displayed, and
the label name conversion module has area attribute information as the parameter, the area attribute information being used to determine whether the text display area is a fixed text display area or a variable text display area.

4. A multilingual support system comprising:
display means for displaying predetermined linguistic information;
selection means for selecting a language type;
output means for outputting a request signal to request a display in a predetermined language type selected by the selection means;
display information storage means for storing display information having a text display area to display a text;
attribute information storage means for storing attribute information of the text displayed in the text display area;
first linguistic information storage means for storing text information in a first language type corresponding to the attribute information of the text displayed in the text display area;
second linguistic information storage means for storing text information in a second language type corresponding to the attribute information of the text displayed in the text display area;
a linguistic-information request receiving unit for receiving the signal to request a display in the predetermined language type;
text information output means for outputting text information to be displayed in the text display area from the text information stored in the first and second linguistic information storage means in response to the request signal received by the linguistic-information request receiving unit;
combination means for combining the text information, which is output through the text information output means, with the text display area corresponding to the attribute information; and
transmission means for transmitting display information supplied from the combination means to the display means.

5. The multilingual support system according to Claim 4, further comprising:
stored-text-information changing and adding means for changing text information in either of the languages types stored in the first and second linguistic information storage means and adding text information in another language type.

6. The multilingual support system according to Claim 4 or 5, wherein
the text display area includes a fixed text display area, where fixed text information is displayed, and a variable text display area, where input text information is displayed, and
the label name conversion module has area attribute information as the parameter, the area attribute information being used to determine whether the text display area is a fixed text display area or a variable text display area.

7. A multilingual support system comprising:
a Web service server which connects with the Internet and opens web pages to public; and
a Web database server which manages data in the system, wherein
the Web service server comprises:
display information storage means for storing display information having a text display area to display a text;
attribute information storage means for storing attribute information of the text displayed in the text display area;
a linguistic-information request output unit for outputting a request signal to request a display in a predetermined language type to the Web database server; and
combination means for combining text information, output through the Web database server, with the text display area corresponding to the attribute information, and
the Web database server comprises:
linguistic information storage means for storing text information in a plurality of language types corresponding to the attribute information;
a linguistic-information request receiving unit for receiving the request signal output from the linguistic-information request output unit; and
text information output means for extracting text information in the predetermined language type from among the text information in the language types stored in the linguistic information storage means in response to the request signal, received by the linguistic-information request receiving unit, to output the extracted text information.

8. The multilingual support system according to Claim 7, further comprising:
stored-text-information changing and adding means for changing the text information in the language types stored in the linguistic information storage means and adding text information in another language type.

9. The multilingual support system according to Claim 7 or 8, wherein
the text display area includes a fixed text display area, where fixed text information is displayed, and a variable text display area, where input text information is displayed, and
the label name conversion module has area attribute information as the parameter, the area attribute information being used to determine whether the text display area is a fixed text display area or a variable text display area.

10. A multilingual support system comprising:
a Web service server which connects with the Internet and opens web pages to public; and
a Web database server which manages data in a system, wherein
the Web service server includes:
a label name conversion module comprising: area-information storage means for creating a label as a text display area in each page on the web pages to store the label as area information; language-specification input means for inputting specification information to specify a language type of text information to be displayed in the text display area; and text information obtaining means for outputting parameters, including at least the specification information and the area information, to the Web database server to obtain text information in a language based on the parameters from the Web database server; and
text information combination means for combining the text information in the language based on the parameters obtained through the text information obtaining means with the text display area, and
the Web database server includes:
linguistic information storage means for storing text information in each of the languages, the text information being displayed in the text display area according to the area information;
text information extraction means for receiving the parameters from the Web service server to extract the text information in the language based on the parameters from the linguistic information storage means; and
text information output means for outputting the text information extracted through the text information extraction means to the text information obtaining means of the Web service server.

11. The multilingual support system according to Claim 10, further comprising:
stored-text-information changing and adding means for changing text information in the language types stored in the linguistic information storage means and adding text information in another language type.

12. The multilingual support system according to Claim 10 or 11, wherein
the parameters of the label name conversion module include a page number of each page constituting the web pages, the specification information, and the area information.

13. The multilingual support system according to any one of Claims 10, 11, and 12, wherein
the text display area includes a fixed text display area, where fixed text information is displayed, and a variable text display area, where input text information is displayed, and
the label name conversion module has area attribute information as the parameter, the area attribute information being used to determine whether the text display area is a fixed text display area or a variable text display area.
